# EUROPEAN PATENT SPECIFICATION

(11) **EP 3 125 506 B1**
(45) Date of publication and mention of the grant of the patent: **22.11.2017**
(21) Application number: 16165063.5
(22) Date of filing: 13.04.2016
(51) Int. Cl.: H04L 29/08, F25B 49/00

(54) **METHOD AND APPARATUS FOR ADJUSTING MODE**
VERFAHREN UND VORRICHTUNG ZUR EINSTELLUNG EINES MODUS
PROCÉDÉ ET APPAREIL POUR MODE D'AJUSTEMENT

(30) Priority: 31.07.2015 CN 201510463439
(43) Date of publication of application: 01.02.2017
(73) Proprietor: Xiaomi Inc., Beijing 100085 (CN)
(72) Inventor: WU, Ke, 100085 Beijing (CN); LIU, Xinyu, 100085 Beijing (CN)
(74) Representative: Sackin, Robert

(56) References cited:
- US-A1- 2013 052 616
- US-A1- 2015 019 354

## Description

### FIELD

The present disclosure relates to a field of intelligent household technology, and more particularly, to a method for adjusting a mode and an apparatus for adjusting a mode.

### BACKGROUND

As living standards rise, a refrigerator has become essential equipment for each household, which brings about great convenience for a user's diet.

It is necessary to manually set an operation mode of the refrigerator for pretreatment of ingredients every time before cooking the ingredients, and take out the ingredients to perform subsequent cooking operations after the pretreatment. For example, the user needs to set a thawing mode for a meat storage area in the refrigerator before cooking the meat and then take out the ingredient for cooking after the thawing process is completed.

US patent application with publication No. US2015/0019354 discloses an automated cooking system that accepts remote orders includes an automated cooking device, a communications device, and a processing circuit. The processing circuit is configured to receive a remote order for a customer via the communications device, wherein the order includes a requested delivery time, schedule a preparation completion time of the order based on the delivery time, and instruct the automated cooking device to prepare the order based on the scheduled completion time of the order.

US patent application with publication No. US2013/0052616 discloses a system which includes a network of appliances functions to retrieve from a data repository, such as a centralized server, at least one data set containing food preparation instructions and to control one or more operations of at least one food preparation device, such as cooking temperatures and times associated with a stove, in accordance with the retrieved at least one data set containing food preparation instructions. The retrieved data set may additional be utilized to cause one or more devices to provide voice prompts to assist a user in the performance of the corresponding food preparation task. The data sets provided for this purpose may be standardized to allow recipes to be shared and used across multiple different appliance types.

### SUMMARY

The invention is related to a method according to claim 1, an apparatus according to claim 6, a computer readable storage medium according to claim 11 and a computer program according to claim 12. Further embodiments of the invention are defined by the dependent claims.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart of a method for adjusting a mode according to an example embodiment of the present disclosure.
Fig. 2 is a flow chart of a method for adjusting a mode according to an example embodiment of the present disclosure.
Fig. 3 is a flow chart of a method for adjusting a mode according to an example embodiment of the present disclosure.
Fig. 4 is a block diagram of an apparatus for adjusting a mode according to an example embodiment of the present disclosure.
Fig. 5 is a block diagram of a first obtaining module in an apparatus for adjusting a mode according to an example embodiment of the present disclosure.
Fig. 6 is a block diagram of a second obtaining module in an apparatus for adjusting a mode according to an example embodiment of the present disclosure.
Fig. 7 is a block diagram of a determining module in an apparatus for adjusting a mode according to an example embodiment of the present disclosure.
Fig. 8 is a block diagram of an adjusting module in an apparatus for adjusting a mode according to an example embodiment of the present disclosure.
Fig. 9 is a block diagram of an apparatus for adjusting a mode according to an example embodiment of the present disclosure (a general structure of an intelligent device).

### DETAILED DESCRIPTION

Embodiments of present disclosure will be further described in detail with reference to the accompanying drawings to make the objectives, technical solutions and advantages of the present disclosure more apparent.

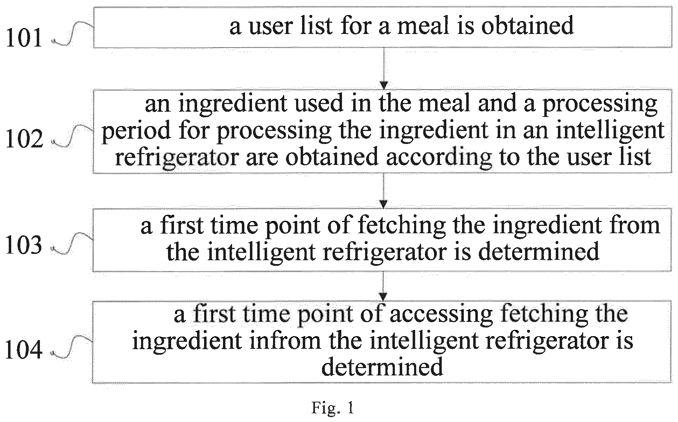

An example embodiment of the present disclosure provides a method for adjusting a mode. Referring to Fig. 1, the embodiment of the present disclosure is applied to an intelligent device, and the method includes the following steps.

In step 101, a user list for a meal is obtained.

In step 102, an ingredient used in the meal and a processing period for processing the ingredient in an intelligent refrigerator are obtained according to the user list.

In step 103, a first time point of fetching the ingredient from the intelligent refrigerator is determined.

In step 104, a working mode of the intelligent refrigerator is adjusted according to the processing period and the first time point.

This embodiment of the present disclosure is applied to the intelligent refrigerator which may adjust the working mode for storing the ingredients in the refrigerator according to the number of diners, and the diners will certainly fetch the ingredients from the intelligent refrigerator, such as fresh vegetables and fruit, frozen meat, or the like in the refrigerator. Thus, it is possible to determine the content and quantity of the ingredients fetched from the intelligent refrigerator according to the number of users in the user list for the meal and identifiers of users, and adjust the working mode of the intelligent refrigerator according to the fetched ingredients to facilitate processing the ingredients directly without the manual adjustment of the working mode of the intelligent refrigerator for pre-treating the ingredients.

In this embodiment of the present disclosure, by determining the user list for the meal, determining the ingredient used in the meal and the processing period for processing the ingredient according to the user list, and determining the first time point of fetching the ingredient, the working mode of the refrigerator is adjusted according to the first time point and the processing period. In this way, it is achievable to adjust the working mode of the refrigerator automatically before the user fetches the ingredients, such that the refrigerator has completed the pretreatment before the user fetches the ingredients, which improves the efficiency of pretreatment of the ingredients by the refrigerator and the man-machine interaction.

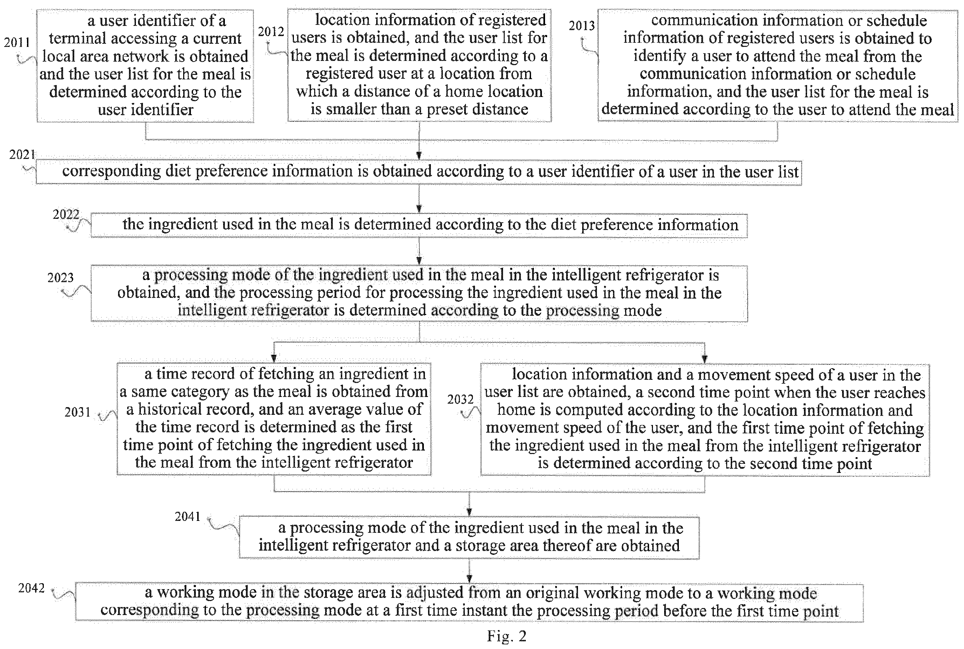

Another example embodiment of the present disclosure provides a method for adjusting a mode. Referring to Fig. 2, the embodiment of the present disclosure is applied to an intelligent device, and the method includes the following steps.

In step 201, a user list for a meal is obtained. This step may be triggered and executed at a certain time point before fetching and processing the ingredient.

The time point of executing this step may be obtained in such a way that, according to a category of the meal, time records of fetching an ingredient corresponding to the same category are selected from historical records, an average value of the multiple time records is computed, and then the longest processing period of various ingredients in the intelligent refrigerator is inferred forwards according to the computed average value.

The category of the meal may involve breakfast, lunch, supper, etc. A HiWiFi (wireless local area network) router in the intelligent refrigerator receives the historical records of fetching the ingredients corresponding to each category.

For the intelligent refrigerator, the user may log in the intelligent refrigerator in advance via a management application for controlling the intelligent refrigerator in a terminal, so as to configure parameters of the intelligent refrigerator and functions thereof. The connection mode may be a communication mode of direct connection established between the terminal and the intelligent refrigerator via a wireless manner; or may be communication between the terminal and the intelligent refrigerator through a network access device (like a router) accessed by the terminal and the intelligent refrigerator simultaneously.

After the user logs in the intelligent refrigerator through the terminal, it is possible to turn family members into registered users in the management application of the intelligent refrigerator by registration, in which the registration information may be user identifier, gender, age, weight, diet preference, etc. The intelligent refrigerator may provide diet recommendations for the registered users according to the registration information, and adjust the working mode at a specified time point according to the diet preference, such that a user may obtain the pre-treated ingredients before the meal and it is convenient for the user to process the ingredients.

Alternatively, the registered user may associate his own user identifier with the intelligent refrigerator, in which the association relationship needs to be recorded in a cloud server, such that the intelligent refrigerator may send an inquiry to the cloud server by accessing the network to obtain location information, communication information and schedule information corresponding to the user identifier, so as to control the working mode of the intelligent refrigerator more accurately according to the above contents.

The way of obtaining the user list for the meal in step 201 may be determined in three situations. That is, step 201 may be realized by the following steps.

### First situation:

In step 2011, a user identifier of a terminal accessing a current local area network is obtained and the user list for the meal is determined according to the user identifier.

In this situation, the intelligent refrigerator may send an inquiry request to a network access device connected with itself, in which the inquiry request is used to inquire the number of terminals accessed by the network access device and the user identifier corresponding to each terminal. The network access device will feed back the terminals currently accessed and the user identifier corresponding to each terminal to the intelligent refrigerator. Then, the intelligent refrigerator determines how many users in the house at present according to the information from the network access device and regards these users as the users for the meal. The content in the use list is the user identifier corresponding to each terminal.

### Second situation:

In step 2012, location information of registered users is obtained, and the user list for the meal is determined according to a registered user at a location from which a distance of a home location is smaller than a preset distance.

In this situation, the terminal for each user reports its own location information to the cloud server regularly; the intelligent refrigerator sends a location-inquiring request carrying the user identifier of a registered user to the cloud server; the cloud server obtains the corresponding location information according to the user identifier in the location-inquiring request and feeds back the corresponding location information to the intelligent refrigerator; the intelligent refrigerator may obtain the home location information when actuated for the first time, or may obtain the home location information by positioning when inquiries the location information of the registered user every time.

The way of determining the distance smaller than the preset distance is to determine the users capable of arriving home within a specified time period, and then the users are regarded as the users for the meal. For example, it is possible to determine a time threshold according to the history time points of returning home from work, and determine whether the user can arrive before the time threshold according to the distance between the home location and the location of the user, as well as the current movement speed of the user.

### Third situation:

In step 2013, communication information or schedule information of registered users is obtained to identify a user to attend the meal from the communication information or schedule information, and the user list for the meal is determined according to the user to attend the meal.

In this situation, the terminal for each user reports its own communication information and schedule information to the cloud server regularly, in which the communication information may include chat records and email records, etc. The intelligent refrigerator sends a request carrying the user identifier of a registered user to the cloud server to inquire the communication information or the schedule information; the cloud server obtains the corresponding communication information or the schedule information according to the user identifier and feeds back the information to the intelligent refrigerator; the intelligent refrigerator may semantically identify the received communication information or schedule information - identifying a preset key word to determine whether the registered user is on business, or whether there is a friend or visitor. The preset key word may be "on business," "visit" or any content involving time and date. The user list for the meal may be determined according to the above content.

If it is identified that a user is on business at the meal, the user will not be in the user list for the meal; if it is identified that a friend will come over, the user identifier of the friend needs to be listed in the user list for the meal.

Alternatively, the intelligent refrigerator may obtain an address book in the terminal of a registered user in advance, and identify contact information from the communication information or the schedule information according to the contact information in the address book, which may identify the users for the meal more accurately, and thus may obtain corresponding diet preference information of these users. Finally, it is possible to determine the ingredients that need to be pretreated in the intelligent refrigerator according to the diet preference information.

Alternatively, step 2011, step 2012 and step 2013 may be executed together to determine the user list for the meal, or a single step may be executed individually to determine the user list for the meal, which will not be defined herein.

Alternatively, if the user list for the meal is null, the intelligent refrigerator remains the original working mode till step 201 is executed next time.

In step 202, an ingredient used in the meal and a processing period for processing the ingredient in an intelligent refrigerator are obtained according to the user list.

Step 202 may be realized by the following steps.

In step 2021, corresponding diet preference information is obtained according to a user identifier of a user in the user list.

The diet preference information may be input in the management application of the terminal by the user during registration, transmitted by the terminal to the intelligent refrigerator for storage, or transmitted by the terminal to the cloud server for storage. The intelligent refrigerator may obtain the diet preference information of each user from the local storage area, or the cloud server may obtain the diet preference information of each user. Moreover, if the user list for the meal includes a non-registered user, a request for inquiring the user diet preference is sent to the cloud server based on the user identifier in the user list to obtain the diet preference information of the non-registered user.

In step 2022, the ingredient used in the meal is determined according to the diet preference information.

The ingredient is determined according to the diet preference information. For example, if the diet preference information is steak, the necessary ingredient is beef; if the diet preference information is vegan, the ingredients used are vegetables.

Since the ingredients are placed in different storage areas in the refrigerator correspondingly, the position of an ingredient is determined after the ingredient is determined.

The intelligent refrigerator may determine the ingredients stored in each storage area by video scanning; or the user may sort out and store the ingredients according to a prompt of each storage area after presetting stock ingredients stored in each storage area.

In step 2023, a processing mode of the ingredient used in the meal in the intelligent refrigerator is obtained, and the processing period for processing the ingredient used in the meal in the intelligent refrigerator is determined according to the processing mode.

Different ingredients are pretreated in different manners. For example, the pretreatment of frozen meat before cooking is thawing, so the corresponding processing mode may be a thawing mode. The pretreatment of vegetables before eating is sterilization, so the corresponding processing mode may be a sterilizing mode. The pretreatment of fruits before eating is ripening, so the corresponding processing mode may be a ripening mode. Consequently, it is possible to preset a corresponding processing mode of each ingredient in the intelligent refrigerator.

Each processing mode corresponds to a different processing period. For example, the thawing mode needs 30 minutes, the sterilization mode 10 minutes and the ripening mode 20 minutes. Hence, it is possible to preset a processing period corresponding to each processing mode in the intelligent refrigerator.

In step 203, a first time point of fetching the ingredient used in the meal from the intelligent refrigerator is determined.

The first time point represents the time point of taking out the ingredient from the intelligent refrigerator so as to cook the ingredient, and needs considering two factors - time point of arriving home and time point of starting cooking.

Therefore, step 203 may be realized in two situations.

In step 2031, a time record of fetching an ingredient in a same category as the meal is obtained from a historical record, and an average value of the time record is determined as the first time point of fetching the ingredient used in the meal from the intelligent refrigerator.

In step 2032, location information and a movement speed of a user in the user list are obtained, a second time point when the user reaches home is computed according to the location information and movement speed of the user, and the first time point of fetching the ingredient used in the meal from the intelligent refrigerator is determined according to the second time point.

Step 2031 and step 2032 may compute the first time point respectively, and a latter one of the two results is selected; or either of step 2031 and step 2032 is selected to compute the first time point, which will not be defined herein.

In step 204, a working mode of the intelligent refrigerator is adjusted according to the processing period and the first time point.

In step 2041, a processing mode of the ingredient used in the meal in the intelligent refrigerator and a storage area thereof are obtained.

In step 2042, a working mode in the storage area is adjusted from an original working mode to a working mode corresponding to the processing mode at a first time instant the processing period before the first time point.

For example, if the ingredient is frozen meat, the first time point is 6:00 p.m. and the processing period lasts 30 minutes, it is necessary to adjust the working mode of the storage area of frozen meat to subject the storage area to a thawing mode.

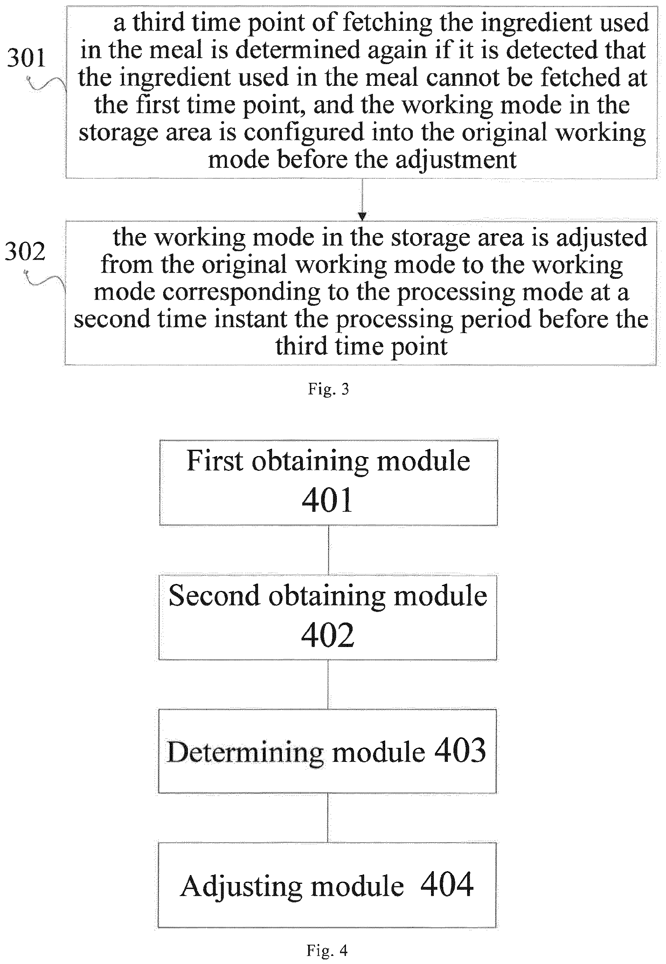

Another example embodiment of the present disclosure provides a method for adjusting a mode. Referring to Fig. 3, the embodiment of the present disclosure is applied to an intelligent device, and the method includes the following steps.

In step 301, a third time point of fetching the ingredient used in the meal is determined again if it is detected that the ingredient used in the meal cannot be fetched at the first time point, and the working mode in the storage area is configured into the original working mode before the adjustment.

This step may be executed when the user list is not null and an incident occurs. For example, if the schedule of the user changes, this step is performed when it is impossible to reach home and fetch the ingredients at the first time point. Thus, the working mode needs to be adjusted again.

Alternatively, the way of detecting that it is impossible to fetch the ingredient at the first time point may be to detect the location information or the schedule information of the user periodically at a specified time interval before the first time point.

If it is determined that the user cannot arrive at the first time point according to the distance between the location of the user and the home location, as well as the current movement speed, the third time point is computed according to the movement speed and the distance. For example, if there is a traffic jam on the way home, the third time point of reaching home is computed again according to the location information of the user and the driving speed.

In addition, if the schedule of the user changes, for example, a business trip appearing in the schedule information, the third time point is a time point of the first meal after the user returns home.

In step 302, the working mode in the storage area is adjusted from the original working mode to the working mode corresponding to the processing mode at a second time instant the processing period before the third time point.

In this embodiment of the present disclosure, by determining the user list for the meal, determining the ingredient used in the meal and the processing period for processing the ingredient according to the user list, and determining the first time point of fetching the ingredient, the working mode of the refrigerator is adjusted according to the first time point and the processing period. In this way, it is achievable to adjust the working mode of the refrigerator automatically before the user fetches the ingredients, such that the refrigerator has completed the pretreatment before the user fetches the ingredients, which improves the efficiency of pretreatment of the ingredients by the refrigerator and the man-machine interaction.

An example embodiment of the present disclosure provides an apparatus for adjusting a mode, which is able to realize the method of adjusting the mode provided in the present disclosure. Referring to Fig. 4, the apparatus includes: a first obtaining module 401 configured to obtain a user list for a meal; a second obtaining module 402 configured to obtain a first ingredient used in the meal and a processing period for processing the first ingredient in an intelligent refrigerator according to the user list; a determining module 403 configured to determine a first time point of fetching the first ingredient from the intelligent refrigerator; and an adjusting module 404 configured to adjust a working mode of the intelligent refrigerator according to the processing period and the first time point.

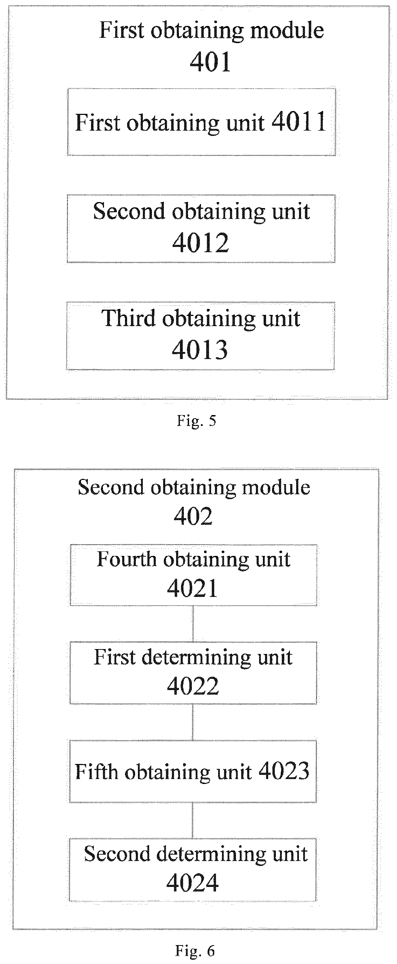

As shown in Fig. 5, the first obtaining module 401 includes: a first obtaining unit 4011 configured to obtain a user identifier of a terminal accessing a local area network and to determine the user list for the meal according to the user identifier of the terminal; a second obtaining unit 4012 configured to obtain location information of registered users and to determine the user list for the meal according to a registered user at a location from which a distance of a home location is smaller than a preset distance; and a third obtaining unit 4013 configured to obtain communication information or schedule information of registered users to identify a user to attend the meal from the communication information or schedule information, and determine the user list for the meal according to the user to attend the meal.

As shown in Fig. 6, the second obtaining module 402 includes: a fourth obtaining unit 4021 configured to obtain diet preference information according to a user identifier of a user in the user list; a first determining unit 4022 configured to determine the first ingredient used in the meal according to the diet preference information; a fifth obtaining unit 4023 configured to obtain a processing mode of the first ingredient in the intelligent refrigerator; and a second determining unit 4024 configured to determine the processing period for processing the first ingredient in the intelligent refrigerator according to the processing mode.

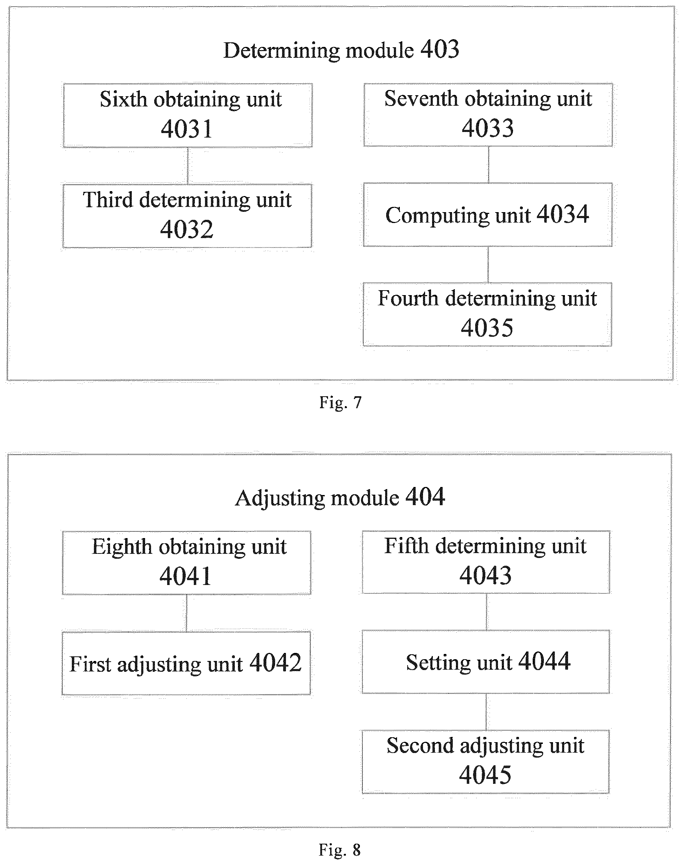

As shown in Fig. 7, the determining module 403 includes: a sixth obtaining unit 4031 configured to obtain a time record of fetching a second ingredient in a same category as the meal from a historical record; a third determining unit 4032 configured to determine an average value of the time record as the first time point of fetching the first ingredient from the intelligent refrigerator; a seventh obtaining unit 4033 configured to obtain location information and movement speed of a user in the user list; a computing unit 4034 configured to compute a second time point when the user in the user list reaches home according to the location information and movement speed of the user in the user list; and a fourth determining unit 4035 configured to determine the first time point of fetching the first ingredient from the intelligent refrigerator according to the second time point.

As shown in Fig. 8, the adjusting module 404 includes: an eighth obtaining unit 4041 configured to obtain a processing mode of the first ingredient in the intelligent refrigerator and a storage area thereof; and a first adjusting unit 4042 configured to adjust a working mode in the storage area from an original working mode to a working mode corresponding to the processing mode at a first time instant the processing period before the first time point.

As shown in Fig. 8, the adjusting module 404 further includes: a fifth determining unit 4043 configured to determine a third time point of fetching the first ingredient if it is detected that the first ingredient is not fetched at the first time point; a setting unit 4044 configured to set the working mode in the storage area into the original working mode; and a second adjusting unit 4045 configured to adjust the working mode in the storage area from the original working mode to the working mode corresponding to the processing mode at a second time instant the processing period before the third time point.

In this embodiment of the present disclosure, by determining the user list for the meal, determining the ingredient used in the meal and the processing period for processing the ingredient according to the user list, and determining the first time point of fetching the ingredient, the working mode of the refrigerator is adjusted according to the first time point and the processing period. In this way, it is achievable to adjust the working mode of the refrigerator automatically before the user fetches the ingredients, such that the refrigerator has completed the pretreatment before the user fetches the ingredients, which improves the efficiency of pretreatment of the ingredients by the refrigerator and the man-machine interaction.

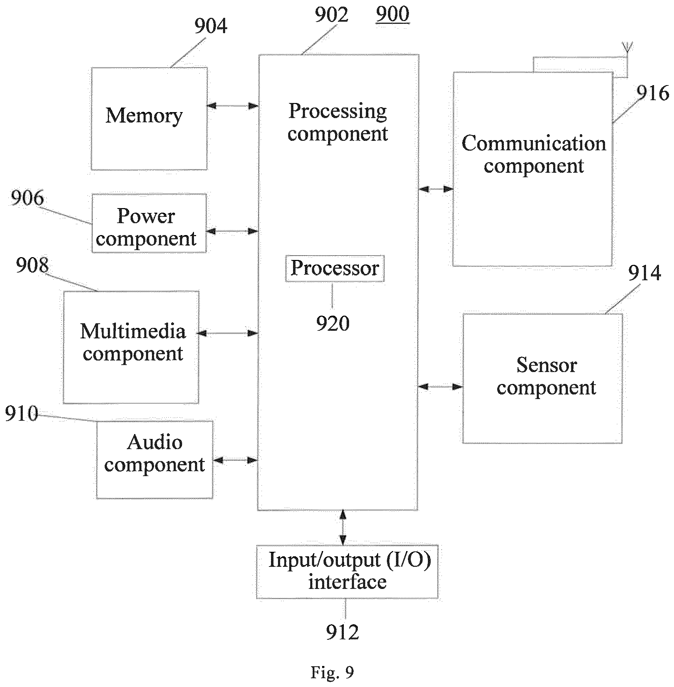

Corresponding to the apparatus for adjusting the mode provided by above example embodiments, another example embodiment of the present disclosure provides an intelligent device 900, referring to Fig. 9. For example, the intelligent device 900 may be an intelligent refrigerator.

Referring to Fig. 9, the device 900 may include one or more of the following components: a processing component 902, a memory 904, a power component 906, a multimedia component 908, an audio component 910, an input/output (I/O) interface 912, a sensor component 915, and a communication component 916.

The processing component 902 typically controls overall operations of the device 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 915 includes one or more sensors to provide status assessments of various aspects of the device 900. For instance, the sensor component 915 may detect an open/closed status of the device 900, relative positioning of components, e.g., the display and the keypad, of the device 900, a change in position of the device 900 or a component of the device 900, a presence or absence of user contact with the device 900, an orientation or an acceleration/deceleration of the device 900, and a change in temperature of the device 900. The sensor component 915 may include a proximity sensor configured to detect the presence of nearby objects without any physical contact. The sensor component 915 may also include a light sensor, such as a CMOS or CCD image sensor, for use in imaging applications. In some embodiments, the sensor component 915 may also include an accelerometer sensor, a gyroscope sensor, a magnetic sensor, a pressure sensor, or a temperature sensor.

The communication component 916 is configured to facilitate communication, wired or wirelessly, between the device 900 and other devices. The device 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 904, executable by the processor 920 in the device 900, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium has stored therein instructions that, when executed by a processor of an intelligent refrigerator, causes the intelligent refrigerator to perform a method for adjusting a mode. The method includes: obtaining a user list for a meal; obtaining a first ingredient used in the meal and a processing period for processing the first ingredient in an intelligent refrigerator according to the user list; determining a first time point of fetching the first ingredient from the intelligent refrigerator; and adjusting a working mode of the intelligent refrigerator according to the processing period and the first time point.

Where functional modules and/or units are referred to in apparatus embodiments for carrying out various steps of the described method(s) it will be understood that these modules and/or units may be implemented in hardware, in software, or a combination of the two. The modules and/or units may be implemented as one or more hardware modules and/or units respectively such as one or more application specific integrated circuits. When implemented in software, the modules and/or units may be implemented as one or more computer programs that are executed on one or more processors.

In the embodiments of the present disclosure, by determining the user list for the meal, determining the ingredient used in the meal and the processing period for processing the ingredient according to the user list, and determining the first time point of fetching the ingredient, the working mode of the refrigerator is adjusted according to the first time point and the processing period. In this way, it is achievable to adjust the working mode of the refrigerator automatically before the user fetches the ingredients, such that the refrigerator has completed the pretreatment before the user fetches the ingredients, which improves the efficiency of pretreatment of the ingredients by the refrigerator and the man-machine interaction.

Other embodiments of the present disclosure will be apparent to those skilled in the art from consideration of the specification and practice of the disclosure disclosed here. This application is intended to cover any variations, uses, or adaptations of the invention following the general principles thereof and including such departures from the present disclosure as come within known or customary practice in the art.

## Claims

1. A method for adjusting a mode of an intelligent refrigerator comprising:
obtaining (101) a user list for a meal, the user list including users for the meal;
obtaining (102) a first ingredient used in the meal and a processing period for processing the first ingredient in the intelligent refrigerator according to the user list;
determining (103) a first time point of fetching the first ingredient from the intelligent refrigerator; and
adjusting (104) a working mode of the intelligent refrigerator according to the processing period and the first time point,
wherein obtaining (101) the user list for the meal comprises:
obtaining (2011) a user identifier of a terminal accessing a local area network and determining the user list for the meal according to the user identifier of the terminal; or
obtaining (2012) location information of registered users, and determining the user list for the meal according to a registered user at a location from which a distance of a home location is smaller than a preset distance; or
obtaining (2013) communication information of registered users to identify a user to attend the meal from the communication information, and determining the user list for the meal according to the user to attend the meal.

2. The method according to claim 1, wherein obtaining (102) the first ingredient used in the meal and the processing period for processing the first ingredient in the intelligent refrigerator according to the user list comprises:
obtaining (2021) diet preference information according to a user identifier of a user in the user list;
determining (2022) the first ingredient used in the meal according to the diet preference information; and
obtaining (2023) a processing mode of the first ingredient in the intelligent refrigerator, and determining the processing period for processing the first ingredient in the intelligent refrigerator according to the processing mode.

3. The method according to any preceding claim , wherein determining (103) the first time point of fetching the first ingredient from the intelligent refrigerator comprises:
obtaining (2031) a time record of fetching a second ingredient in a same category as the meal from a historical record, and determining an average value of the time record as the first time point of fetching the first ingredient from the intelligent refrigerator; or
obtaining (2032) location information and a movement speed of a user in the user list, computing a second time point when the user in the user list reaches home according to the location information and the movement speed of the user in the user list, and determining the first time point of fetching the first ingredient from the intelligent refrigerator according to the second time point.

4. The method according to any preceding claim, wherein adjusting (104) the working mode of the intelligent refrigerator according to the processing period and the first time point comprises:
obtaining (2041) a processing mode of the first ingredient in the intelligent refrigerator and a storage area of the first ingredient; and
adjusting (2042) a working mode in the storage area from an original working mode to a working mode corresponding to the processing mode at a first time instant the processing period before the first time point.

5. The method according to claim 4, further comprising:
determining (301) a third time point of fetching the first ingredient if it is detected that the first ingredient is not fetched at the first time point, and setting the working mode in the storage area into the original working mode; and
adjusting (302) the working mode in the storage area from the original working mode to the working mode corresponding to the processing mode at a second time instant the processing period before the third time point.

6. An apparatus for adjusting a mode of an intelligent refrigerator comprising:
a first obtaining module (401) configured to obtain a user list for a meal, the user list including users for the meal;
a second obtaining module (402) configured to obtain a first ingredient used in the meal and a processing period for processing the first ingredient in the intelligent refrigerator according to the user list;
a determining module (403) configured to determine a first time point of fetching the first ingredient from the intelligent refrigerator; and
an adjusting module (404) configured to adjust a working mode of the intelligent refrigerator according to the processing period and the first time point,
wherein the first obtaining module (401) comprises:
a first obtaining unit (4011) configured to obtain a user identifier of a terminal accessing a local area network and to determine the user list for the meal according to the user identifier of the terminal; or
a second obtaining unit (4012) configured to obtain location information of registered users and to determine the user list for the meal according to a registered user at a location from which a distance of a home location is smaller than a preset distance; or
a third obtaining unit (4013) configured to obtain communication information of registered users to identify a user to attend the meal from the communication information, and determine the user list for the meal according to the user to attend the meal.

7. The apparatus according to claim 6, wherein the second obtaining module (402) comprises:
a fourth obtaining unit (4021) configured to obtain diet preference information according to a user identifier of a user in the user list;
a first determining unit (4022) configured to determine the first ingredient used in the meal according to the diet preference information;
a fifth obtaining unit (4023) configured to obtain a processing mode of the first ingredient in the intelligent refrigerator; and
a second determining unit (4024) configured to determine the processing period for processing the first ingredient in the intelligent refrigerator according to the processing mode.

8. The apparatus according to claim 6 or claim 7, wherein the determining module (403) comprises:
a sixth obtaining unit (4031) configured to obtain a time record of fetching a second ingredient in a same category as the meal from a historical record;
a third determining unit (4032) configured to determine an average value of the time record as the first time point of fetching the first ingredient from the intelligent refrigerator;
a seventh obtaining unit (4033) configured to obtain location information and a movement speed of a user in the user list;
a computing unit (4034) configured to compute a second time point when the user in the user list reaches home according to the location information and the movement speed of the user in the user list; and
a fourth determining unit (4035) configured to determine the first time point of fetching the first ingredient from the intelligent refrigerator according to the second time point.

9. The apparatus according to any of claims 6 to 8, wherein the adjusting module (404) comprises:
an eighth obtaining unit (4041) configured to obtain a processing mode of the first ingredient in the intelligent refrigerator and a storage area of the first ingredient; and
a first adjusting unit (4042) configured to adjust a working mode in the storage area from an original working mode to a working mode corresponding to the processing mode at a first time instant the processing period before the first time point.

10. The apparatus according to claim 9, wherein the adjusting module (404) further comprises:
a fifth determining unit (4043) configured to determine a third time point of fetching the first ingredient if it is detected that the first ingredient is not fetched at the first time point;
a setting unit (4044) configured to set the working mode in the storage area into the original working mode; and
a second adjusting unit (4045) configured to adjust the working mode in the storage area from the original working mode to the working mode corresponding to the processing mode at a second time instant the processing period before the third time point.

11. A non-transitory computer readable storage medium, when executed by a processor of an intelligent refrigerator, causes the intelligent refrigerator to execute a method for adjusting a mode according to any of claims 1-5.

12. A computer program, which when executing on a processor, performs a method according to any of claims 1-5.

## Patentansprüche

1. Verfahren zum Einstellen eines Modus eines intelligenten Kühlschranks, das aufweist:
Beschaffen (101) einer Benutzerliste für eine Mahlzeit, wobei die Benutzerliste Benutzer für die Mahlzeit enthält;
Beschaffen (102) einer ersten in der Mahlzeit verwendeten Zutat und einer Verarbeitungszeitspanne zum Verarbeiten der ersten Zutat im intelligenten Kühlschrank gemäß der Benutzerliste;
Bestimmen (103) eines ersten Zeitpunkts des Holens der ersten Zutat aus dem intelligenten Kühlschrank und
Einstellen (104) eines Arbeitsmodus des intelligenten Kühlschranks gemäß der Verarbeitungszeitspanne und dem ersten Zeitpunkt,
wobei das Beschaffen (101) der Benutzerliste für die Mahlzeit aufweist:
Beschaffen (2011) einer Benutzerkennung eines Endgeräts, das auf ein lokales Netzwerk zugreift, und zum Bestimmen der Benutzerliste für die Mahlzeit gemäß der Benutzerkennung des Endgeräts oder
Beschaffen (2012) von Ortsinformationen registrierter Benutzer und Bestimmen der Benutzerliste für die Mahlzeit gemäß einem registrierten Benutzer an einem Ort, von dem eine Entfernung eines Heimatorts kleiner als eine voreingestellte Entfernung ist; oder
Beschaffen (2013) von Kommunikationsinformationen von registrierten Benutzern zum Identifizieren eines Benutzers, der an der Mahlzeit teilnehmen soll, anhand der Kommunikationsinformationen und Bestimmen der Benutzerliste für die Mahlzeit gemäß dem Benutzer, der an der Mahlzeit teilnehmen soll.

2. Verfahren nach Anspruch 1, wobei das Beschaffen (102) der in der Mahlzeit verwendeten ersten Zutat und die Verarbeitungszeitspanne zum Verarbeiten der ersten Zutat in dem intelligenten Kühlschrank gemäß der Benutzerliste aufweist:
Beschaffen (2021) von Ernährungspräferenzinformationen gemäß einer Benutzerkennung eines Benutzers in der Benutzerliste;
Bestimmen (2022) der in der Mahlzeit verwendeten ersten Zutat gemäß den Ernährungspräferenzinformationen und
Beschaffen (2023) eines Verarbeitungsmodus der ersten Zutat in dem intelligenten Kühlschrank und Bestimmen der Verarbeitungszeitspanne zum Verarbeiten der ersten Zutat in dem intelligenten Kühlschrank gemäß dem Verarbeitungsmodus.

3. Verfahren nach einem der vorhergehenden Ansprüche, wobei das Bestimmen (103) des ersten Zeitpunkts des Holens der ersten Zutat aus dem intelligenten Kühlschrank aufweist:
Beschaffen (2031) eines Zeitdatensatzes des Holens einer zweiten Zutat in der gleichen Kategorie wie die Mahlzeit aus einem historischen Datensatz und Bestimmen eines Durchschnittswerts des Zeitdatensatzes als den ersten Zeitpunkt des Holens der ersten Zutat aus dem intelligenten Kühlschrank oder
Beschaffen (2032) von Ortsinformationen und einer Bewegungsgeschwindigkeit eines Benutzers in der Benutzerliste, Berechnen eines zweiten Zeitpunkts, an dem der Benutzer in der Benutzerliste den Haushalt erreicht, gemäß den Ortsinformationen und der Bewegungsgeschwindigkeit des Benutzers in der Benutzerliste, und Bestimmen des ersten Zeitpunkts des Holens der ersten Zutat aus dem intelligenten Kühlschrank gemäß dem zweiten Zeitpunkt.

4. Verfahren nach einem der vorhergehenden Ansprüche, wobei das Einstellen (104) des Arbeitsmodus des intelligenten Kühlschranks gemäß der Verarbeitungszeitspanne und dem ersten Zeitpunkt aufweist:
Beschaffen (2041) eines Verarbeitungsmodus der ersten Zutat in dem intelligenten Kühlschrank und eines Lagerbereichs der ersten Zutat und
Einstellen (2042) eines Arbeitsmodus im Lagerbereich von einem ursprünglichen Arbeitsmodus auf einen Arbeitsmodus, der dem Verarbeitungsmodus zu einer ersten Zeit im Augenblick der Verarbeitungszeitspanne vor dem ersten Zeitpunkt entspricht.

5. Verfahren nach Anspruch 4, das ferner aufweist:
Bestimmen (301) eines dritten Zeitpunkts des Holens der ersten Zutat, wenn erfasst wird, dass die erste Zutat an dem ersten Zeitpunkt nicht geholt wird, und Einstellen des Arbeitsmodus im Lagerbereich auf den ursprünglichen Arbeitsmodus und
Einstellen (302) des Arbeitsmodus im Lagerbereich von dem ursprünglichen Arbeitsmodus auf den Arbeitsmodus, der dem Verarbeitungsmodus zu einer zweiten Zeit im Augenblick der Verarbeitungszeitspanne vor dem dritten Zeitpunkt entspricht.

6. Vorrichtung zum Einstellen eines Modus eines intelligenten Kühlschranks, die aufweist:
ein erstes Beschaffungsmodul (401), das zum Beschaffen einer Benutzerliste für eine Mahlzeit konfiguriert ist, wobei die Benutzerliste Benutzer für die Mahlzeit enthält;
ein zweites Beschaffungsmodul (402), das zum Beschaffen einer ersten in der Mahlzeit verwendeten Zutat und einer Verarbeitungszeitspanne zum Verarbeiten der ersten Zutat im intelligenten Kühlschrank gemäß der Benutzerliste konfiguriert ist;
ein Bestimmungsmodul (403), das zum Bestimmen eines ersten Zeitpunkts des Holens der ersten Zutat aus dem intelligenten Kühlschrank konfiguriert ist; und
ein Einstellmodul (404), das zum Einstellen eines Arbeitsmodus des intelligenten Kühlschranks gemäß der Verarbeitungszeitspanne und dem ersten Zeitpunkt konfiguriert ist,
wobei das erste Beschaffungsmodul (401) aufweist:
eine erste Beschaffungseinheit (4011), die zum Beschaffen einer Benutzerkennung eines Endgeräts, das auf ein lokales Netzwerk zugreift, und zum Bestimmen der Benutzerliste für die Mahlzeit gemäß der Benutzerkennung des Endgeräts konfiguriert ist; oder
eine zweite Beschaffungseinheit (4012), die zum Beschaffen von Ortsinformationen registrierter Benutzer und zum Bestimmen der Benutzerliste für die Mahlzeit gemäß einem registrierten Benutzer an einem Ort, von dem eine Entfernung eines Heimatorts kleiner als eine voreingestellte Entfernung ist, konfiguriert ist; oder
eine dritte Beschaffungseinheit (4013), die zum Beschaffen von Kommunikationsinformationen von registrierten Benutzern zum Identifizieren eines Benutzers, der an der Mahlzeit teilnehmen soll, anhand der Kommunikationsinformationen und Bestimmen der Benutzerliste für die Mahlzeit gemäß dem Benutzer, der an der Mahlzeit teilnehmen soll, konfiguriert ist.

7. Vorrichtung nach Anspruch 6, wobei das zweite Beschaffungsmodul (402) aufweist:
eine vierte Beschaffungseinheit (4021), die zum Beschaffen von Ernährungspräferenzinformationen gemäß einer Benutzerkennung eines Benutzers in der Benutzerliste konfiguriert ist;
eine erste Bestimmungseinheit (4022), die zum Bestimmen der in der Mahlzeit verwendeten ersten Zutat gemäß den Ernährungspräferenzinformationen konfiguriert ist;
eine fünfte Beschaffungseinheit (4023), die zum Beschaffen eines Verarbeitungsmodus der ersten Zutat in dem intelligenten Kühlschrank konfiguriert ist; und
eine zweite Bestimmungseinheit (4024), die zum Bestimmen der Verarbeitungszeitspanne zum Verarbeiten der ersten Zutat in dem intelligenten Kühlschrank gemäß dem Verarbeitungsmodus konfiguriert ist.

8. Vorrichtung nach Anspruch 6 oder Anspruch 7, wobei das Bestimmungsmodul (403) aufweist:
eine sechste Beschaffungseinheit (4031), die zum Beschaffen eines Zeitdatensatzes des Holens einer zweiten Zutat in der gleichen Kategorie wie die Mahlzeit aus einem historischen Datensatz konfiguriert ist;
eine dritte Bestimmungseinheit (4032), die zum Bestimmen eines Durchschnittswerts des Zeitdatensatzes als den ersten Zeitpunkt des Holens der ersten Zutat aus dem intelligenten Kühlschrank konfiguriert ist;
eine siebte Beschaffungseinheit (4033), die zum Beschaffen von Ortsinformationen und einer Bewegungsgeschwindigkeit eines Benutzers in der Benutzerliste konfiguriert ist;
eine Recheneinheit (4034), die zum Berechnen eines zweiten Zeitpunkts, an dem der Benutzer in der Benutzerliste die Heimat erreicht, gemäß den Ortsinformationen und der Bewegungsgeschwindigkeit des Benutzers in der Benutzerliste konfiguriert ist; und
eine vierte Bestimmungseinheit (4035), die zum Bestimmen des ersten Zeitpunkts des Holens der ersten Zutat aus dem intelligenten Kühlschrank gemäß dem zweiten Zeitpunkt konfiguriert ist.

9. Vorrichtung nach einem der Ansprüche 6 bis 8, wobei das Einstellmodul (404) aufweist:
eine achte Beschaffungseinheit (4041), die zum Beschaffen eines Verarbeitungsmodus der ersten Zutat in dem intelligenten Kühlschrank und eines Lagerbereichs der ersten Zutat konfiguriert ist; und
eine erste Einstelleinheit (4042), die zum Einstellen eines Arbeitsmodus im Lagerbereich von einem ursprünglichen Arbeitsmodus auf einen Arbeitsmodus, der dem Verarbeitungsmodus zu einer ersten Zeit im Augenblick der Verarbeitungszeitspanne vor dem ersten Zeitpunkt entspricht, konfiguriert ist.

10. Vorrichtung nach Anspruch 9, wobei das Einstellmodul (404) ferner aufweist:
eine fünfte Bestimmungseinheit (4043), die zum Bestimmen eines dritten Zeitpunkts des Holens der ersten Zutat, wenn erfasst wird, dass die erste Zutat an dem ersten Zeitpunkt nicht geholt wird, konfiguriert ist;
eine Einstelleinheit (4044), die zum Einstellen des Arbeitsmodus im Lagerbereich auf den ursprünglichen Arbeitsmodus konfiguriert ist; und
eine zweite Einstelleinheit (4045), die zum Einstellen des Arbeitsmodus im Lagerbereich von dem ursprünglichen Arbeitsmodus auf den Arbeitsmodus, der dem Verarbeitungsmodus zu einer zweiten Zeit im Augenblick der Verarbeitungszeitspanne vor dem dritten Zeitpunkt entspricht, konfiguriert ist.

11. Nichtflüchtiges computerlesbares Speichermedium, das, wenn von einem Prozessor eines intelligenten Kühlschranks ausgeführt, den intelligenten Kühlschrank zum Ausführen eines Verfahrens nach einem der Ansprüche 1 bis 5 veranlasst.

12. Computerprogramm, das, wenn es auf einem Prozessor ausgeführt wird, ein Verfahren nach einem der Ansprüche 1 bis 5 durchführt.

## Revendications

1. Procédé d'ajustement d'un mode de réfrigérateur intelligent comprenant :
l'obtention (101) d'une liste d'utilisateurs d'un repas, la liste d'utilisateurs comportant des utilisateurs du repas ;
l'obtention (102), d'un premier ingrédient utilisé dans le repas et d'une période de traitement pour traiter le premier ingrédient dans le réfrigérateur intelligent conformément à la liste d'utilisateurs ;
la détermination (103) d'un premier point temporel de collecte du premier ingrédient dans le réfrigérateur intelligent ;
l'ajustement (104) d'un mode de fonctionnement du réfrigérateur intelligent conformément à la période de traitement et au premier point temporel,
dans lequel l'obtention (101) de la liste d'utilisateurs du repas comprend :
l'obtention (2011) d'un identifiant d'utilisateur d'un terminal qui accède à un réseau local et la détermination de la liste d'utilisateurs du repas conformément à l'identifiant d'utilisateur du terminal ; ou
l'obtention (2012) d'informations d'emplacements d'utilisateurs enregistrés, et la détermination de la liste d'utilisateurs du repas conformément à un utilisateur enregistré à un emplacement par rapport auquel une distance d'un emplacement de domicile est inférieure à une distance prédéfinie ; ou
l'obtention (2013) d'informations de communication d'utilisateurs enregistrés pour identifier un utilisateur devant assister au repas parmi les informations de communication, et la détermination de la liste d'utilisateurs du repas conformément à l'utilisateur devant assister au repas.

2. Procédé selon la revendication 1, dans lequel l'obtention (102) du premier ingrédient utilisé dans le repas et de la période de traitement pour traiter le premier ingrédient dans le réfrigérateur intelligent conformément à la liste d'utilisateurs comprend :
l'obtention (2021) d'informations de préférence de régime conformément à un identifiant d'utilisateur d'un utilisateur dans la liste d'utilisateurs ;
la détermination (2022) du premier ingrédient utilisé dans le repas conformément aux informations de préférence de régime ; et
l'obtention (2023) d'un mode de traitement du premier ingrédient dans le réfrigérateur intelligent, et la détermination de la période de traitement pour traiter le premier ingrédient dans le réfrigérateur intelligent conformément au mode de traitement.

3. Procédé selon l'une quelconque des revendications précédentes, dans lequel la détermination (103) du premier point temporel de collecte du premier ingrédient dans le réfrigérateur intelligent comprend :
l'obtention (2031) d'un enregistrement de temps de collecte d'un second ingrédient dans une même catégorie que le repas dans un enregistrement historique, et la détermination d'une valeur moyenne de l'enregistrement de temps comme le premier point temporel de collecte du premier ingrédient dans le réfrigérateur intelligent ; ou
l'obtention (2032) d'informations d'emplacement et d'une vitesse de déplacement d'un utilisateur dans la liste d'utilisateurs, le calcul d'un deuxième point temporel quand l'utilisateur dans la liste d'utilisateurs atteint son domicile conformément aux informations d'emplacement et à la vitesse de déplacement de l'utilisateur dans la liste d'utilisateurs, et la détermination du premier point temporel de collecte du premier ingrédient dans le réfrigérateur intelligent conformément au deuxième point temporel.

4. Procédé selon l'une quelconque des revendications précédentes, dans lequel l'ajustement (104) du mode de fonctionnement du réfrigérateur intelligent conformément à la période de traitement et au premier point temporel comprend :
l'obtention (2041) d'un mode de traitement du premier ingrédient dans le réfrigérateur intelligent et d'une zone de stockage du premier ingrédient ; et
l'ajustement (2042) d'un mode de fonctionnement dans la zone de stockage d'un mode de fonctionnement d'origine à un mode de fonctionnement correspondant au mode de traitement à un premier instant de temps de la période de traitement avant le premier point temporel.

5. Procédé selon la revendication 4, comprenant en outre :
la détermination (301) d'un troisième point temporel de collecte du premier ingrédient s'il est détecté que le premier ingrédient n'est pas collecté au premier point temporel, et le réglage du mode de fonctionnement dans la zone de stockage sur le mode de fonctionnement d'origine ; et
l'ajustement (302) du mode de fonctionnement dans la zone de stockage du mode de fonctionnement d'origine au mode de fonctionnement correspondant au mode de traitement à un second instant de temps de la période de traitement avant le troisième point temporel.

6. Appareil d'ajustement d'un mode de réfrigérateur intelligent comprenant :
un premier module d'obtention (401) configuré pour obtenir une liste d'utilisateurs d'un repas, la liste d'utilisateurs comportant des utilisateurs du repas ;
un second module d'obtention (402) configuré pour obtenir un premier ingrédient utilisé dans le repas et une période de traitement pour traiter le premier ingrédient dans le réfrigérateur intelligent conformément à la liste d'utilisateurs ;
un module de détermination (403) configuré pour déterminer un premier point temporel de collecte du premier ingrédient dans le réfrigérateur intelligent ; et
un module d'ajustement (404) configuré pour ajuster un mode de fonctionnement du réfrigérateur intelligent conformément à la période de traitement et au premier point temporel,
dans lequel le premier module d'obtention (401) comprend :
une première unité d'obtention (4011) configurée pour obtenir un identifiant d'utilisateur d'un terminal qui accède à un réseau local et déterminer la liste d'utilisateurs du repas conformément à l'identifiant d'utilisateur du terminal ; ou
une deuxième unité d'obtention (4012) configurée pour obtenir des informations d'emplacements d'utilisateurs enregistrés, et déterminer la liste d'utilisateurs du repas conformément à un utilisateur enregistré à un emplacement par rapport auquel une distance d'un emplacement de domicile est inférieure à une distance prédéfinie ; ou
une troisième unité d'obtention (4013) configurée pour obtenir des informations de communication d'utilisateurs enregistrés pour identifier un utilisateur devant assister au repas parmi les informations de communication, et déterminer la liste d'utilisateurs du repas conformément à l'utilisateur devant assister au repas.

7. Appareil selon la revendication 6, dans lequel le second module d'obtention (402) comprend
une quatrième unité d'obtention (4021) configurée pour déterminer des informations de préférence de régime conformément à un identifiant d'utilisateur d'un utilisateur dans la liste d'utilisateurs ;
une première unité de détermination (4022) configurée pour déterminer le premier ingrédient utilisé dans le repas conformément aux informations de préférence de régime ; une cinquième unité d'obtention (4023) configurée pour obtenir un mode de traitement du premier ingrédient dans le réfrigérateur intelligent ; et
une deuxième unité de détermination (4024) configurée pour déterminer la période de traitement pour traiter le premier ingrédient dans le réfrigérateur intelligent conformément au mode de traitement.

8. Appareil selon la revendication 6 ou la revendication 7, dans lequel le module de détermination (403) comprend :
une sixième unité d'obtention (4031) configurée pour obtenir un enregistrement de temps de collecte d'un second ingrédient dans une même catégorie que le repas dans un enregistrement historique ;
une troisième unité de détermination (4032) configurée pour déterminer une valeur moyenne de l'enregistrement de temps comme le premier point temporel de collecte du premier ingrédient dans le réfrigérateur intelligent ;
une septième unité d'obtention (4033) configurée pour obtenir des informations d'emplacement et d'une vitesse de déplacement d'un utilisateur dans la liste d'utilisateurs ;
une unité de calcul (4034) configurée pour calculer un deuxième point temporel quand l'utilisateur dans la liste d'utilisateurs atteint son domicile conformément aux informations d'emplacement et à la vitesse de déplacement de l'utilisateur dans la liste d'utilisateurs ; et
une quatrième unité de détermination (4035) configurée pour déterminer le premier point temporel de collecte du premier ingrédient dans le réfrigérateur intelligent conformément au deuxième point temporel.

9. Appareil selon l'une quelconque des revendications 6 à 8, dans lequel le module d'ajustement (404) comprend :
une huitième unité d'obtention (4041) configurée pour obtenir un mode de traitement du premier ingrédient dans le réfrigérateur intelligent et une zone de stockage du premier ingrédient ; et
une première unité d'ajustement (4042) configurée pour ajuster un mode de fonctionnement dans la zone de stockage d'un mode de fonctionnement d'origine à un mode de fonctionnement correspondant au mode de traitement à un premier instant de temps de la période de traitement avant le premier point temporel.

10. Appareil selon la revendication 9, dans lequel le module d'ajustement (404) comprend en outre :
une cinquième unité de détermination (4043) configurée pour déterminer un troisième point temporel de collecte du premier ingrédient s'il est détecté que le premier ingrédient n'est pas collecté au premier point temporel ;
une unité de réglage (4044) configurée pour régler le mode de fonctionnement dans la zone de stockage sur le mode de fonctionnement d'origine ; et
une seconde unité d'ajustement (4045) configurée pour ajuster le mode de fonctionnement dans la zone de stockage du mode de fonctionnement d'origine au mode de fonctionnement correspondant au mode de traitement à un second instant de temps de la période de traitement avant le troisième point temporel.

11. Support de mémorisation non transitoire lisible par ordinateur qui, à son exécution par un processeur d'un réfrigérateur intelligent, amène le réfrigérateur intelligent à exécuter un procédé d'ajustement d'un mode selon l'une quelconque des revendications 1 à 5.

12. Programme informatique qui, à son exécution sur un processeur, exécute un procédé selon l'une quelconque des revendications 1 à 5.
